# EUROPEAN PATENT APPLICATION

(11) **EP 3 910 117 A2**
(43) Date of publication of application: **17.11.2021**
(21) Application number: 21173658.2
(22) Date of filing: 12.05.2021
(51) Int. Cl.: E03C 1/04

(54) **MECHANICAL SHOWER DEVICE HAVING SLIDING TEMPERATURE REGULATION, SHOWER HAVING SLIDING TEMPERATURE REGULATION AND DISPLAY MODULE THEREOF**

(30) Priority: 12.05.2020 CN 202010397188
(71) Applicant: Xiamen Solex High-tech Industries Co., Ltd., 361000 Fujian (CN)
(72) Inventor: ZHANG, Yonghui, Xiamen, 361000 (CN); HU, Lihong, Xiamen, 361000 (CN); CHEN, Wenxing, Xiamen, 361000 (CN)
(74) Representative: Verscht, Thomas Kurt Albert

(57) **Abstract**

The present disclosure discloses a mechanical shower device having sliding temperature regulation, which comprising a cold water inlet, a hot water inlet, a switching valve and a toggle button; the switching valve comprises a water inlet; the toggle button is disposed on a surface of the shower device and is configured to be toggled along a length direction of the shower device; when the toggle button is in a middle position, the water inlet is in communication with the cold water inlet and the hot water inlet at the same time; when the toggle button moves leftward or rightward relative to the middle position, a water flowing area between the water inlet and one of the cold water inlet and hot water inlet gradually decreases, and a water flowing area between the water inlet and the other one gradually increases. The mechanical shower device having sliding temperature regulation adopts a pure machine structure to realize sliding temperature regulation, a cost is relatively low, and an operation method is relatively intuitive.

## Description

### FIELD OF THE DISCLOSURE

The present disclosure relates to sanitary wares, in particular relates to a shower device.

### BACKGROUND OF THE DISCLOSURE

A shower device is a device used to control a combined shower head. It has functions for switching water outlet terminals, opening and stopping water and temperature adjustment. This kind of shower device has evolved from a single handle to an operation box along with increase of shower functions, and its operation convenience and intuitiveness have been greatly improved. However, this kind of operation box often requires a large number of electronic components to achieve switching, temperature adjustment, etc., a cost is relatively high, waterproof requirements are also relatively high, which causes the cost of this kind of shower box to remain high, is usually only assembled to high-end products and cannot be used by more people.

### BRIEF SUMMARY OF THE DISCLOSURE

The present disclosure provides a mechanical shower device having sliding temperature regulation, which adopts a pure machine structure to realize sliding temperature regulation, a cost is relatively low, and an operation method is relatively intuitive.

In order to solve the technical problems, the present disclosure discloses a mechanical shower device having sliding temperature regulation, which comprising a cold water inlet, a hot water inlet, a switching valve and a toggle button; the switching valve comprises a water inlet; the toggle button is disposed on a surface of the shower device and is configured to be toggled along a length direction of the shower device;

When the toggle button is in a middle position, the water inlet is in communication with the cold water inlet and the hot water inlet at the same time; when the toggle button moves leftward or rightward relative to the middle position, a water flowing area between the water inlet and one of the cold water inlet and hot water inlet gradually decreases, and a water flowing area between the water inlet and the other one gradually increases.

In a preferred embodiment, the switching valve comprises a valve body and a switching shaft operatively disposed on the valve body; one end of the switching shaft is operatively connected to the toggle button by a linkage member.

In a preferred embodiment, a side wall of the valve body is disposed with the water inlet.

In a preferred embodiment, the linkage member is a swing shaft, one end of the swing shaft is operatively connected to the toggle button, and the other end is rotatably connected to the one end of the switching shaft.

In a preferred embodiment, when the toggle button is in the middle position, the water inlet is in communication with the cold water inlet and the hot water inlet at the same time; when the toggle button moves to two end positions, the water inlet is merely in communication with the cold water inlet or the hot water inlet.

In a preferred embodiment, the switching valve comprises a cold water proportional valve and a hot water proportional valve, and the water inlet is in communication with water outlets of the cold water proportional valve and the hot water proportional valve.

In a preferred embodiment, the cold water proportional valve and the hot water proportional valve respectively comprise a pole plug configured to open and close the water outlets; pole plugs of the cold water proportional valve and the hot water proportional valve are connected by an adjusting rod.

In a preferred embodiment, a middle portion of the adjusting rod is a swing fulcrum; when the adjusting rod is in a horizontal position, the water outlets of the cold water proportional valve and the hot water proportional valve are respectively opened by the pole plugs; when the swing fulcrum swings towards the cold water proportional valve or the hot water proportional valve, the water outlets of the cold water proportional valve or the hot water proportional valve are gradually closed by the pole plugs.

In a preferred embodiment, when the toggle button moves leftward or rightward relative to the fulcrum, a push force generated between the toggle button and the adjusting rod pushes the adjusting rod to swing towards the cold water proportional valve or the hot water proportional valve.

In a preferred embodiment, a side of the adjusting rod facing the toggle button extends to define an inclined surface from the fulcrum to the two sides.

In a preferred embodiment, the adjusting rod is operatively connected to the toggle button along a moving direction of the toggle; when the toggle button moves leftward or rightward relative to the middle position, a push force generated between the adjusting rod and the pole plugs pushes the pole plugs to gradually close the water outlets of the cold water proportional valve or the hot water proportional valve.

In a preferred embodiment, which further comprises a display module, which further comprises a light-emitting module, a lamp holder and a panel; the light-emitting module and the panel are respectively disposed on two sides of the lamp holder along a thickness direction of the lamp holder; a side of the lamp holder facing the light-emitting module is divided into a plurality of grids along a sliding direction for temperature regulation, surfaces of the grids along the thickness direction of the lamp holder are light-transmitting surfaces, and the light-emitting module is disposed with light-emitting units corresponding to the grids one-to-one;
the panel is a transparent panel, a side of which facing the lamp holder is covered with a light-transmitting layer, and a side of the light-transmitting layer facing the lamp holder is disposed with opaque numbers corresponding to part of the grids one-to-one.

In a preferred embodiment, the number of grids is N, wherein N-1 corresponds to the opaque numbers one to one; when temperature of outflowing water is greater than the maximum value of the opaque numbers, a light-emitting unit corresponding to the remaining grid flashes and emits light.

In a preferred embodiment, a side of the panel facing the light-transmitting layer is disposed with water outlet terminal indicator icons and heating and cooling indicator icons.

The present disclosure further discloses a display module of a shower device having sliding temperature regulation, which comprises a light-emitting module, a lamp holder and a panel; the light-emitting module and the panel are respectively disposed on two sides of the lamp holder along a thickness direction of the lamp holder; a side of the lamp holder facing the light-emitting module is divided into a plurality of grids along a sliding direction for temperature regulation, surfaces of the grids along the thickness direction of the lamp holder are light-transmitting surfaces, and the light-emitting module is disposed with light-emitting units corresponding to the grids one-to-one;

the panel is a transparent panel, a side of which facing the lamp holder is covered with a light-transmitting layer, and a side of the light-transmitting layer facing the lamp holder is disposed with opaque numbers corresponding to part of the grids one-to-one.

In a preferred embodiment, the number of grids is N, wherein N-1 corresponds to the opaque numbers one to one; when temperature of outflowing water is greater than the maximum value of the opaque numbers, a light-emitting unit corresponding to the remaining grid blinks and emits light.

In a preferred embodiment, a side of the panel facing the light-transmitting layer is disposed with water outlet terminal indicator icons and heating and cooling indicator icons.

The present disclosure further discloses a shower having sliding temperature regulation, which comprises the display module.

Compared with the existing techniques, the technical solution has the following advantages.

The present disclosure provides a mechanical shower device having sliding temperature regulation, which drives the water inlet of the valve body to be in communication with one or two of the cold water inlet and the hot water inlet by the toggle button, thereby the temperature of the outflowing water is changed. This temperature regulation method can increase or decrease the temperature due to toggling the toggle button in one direction, which is very intuitive, and the cost of the pure machine temperature regulation method is relatively low. In addition, this operation has no relationship with water pressure. A required force for user operation is the same under any water pressure, and the operation consistency is better.

### BRIEF DESCRIPTION OF THE DRAWINGS

Fig. 1 illustrates a perspective view of Embodiment 1 of the present disclosure;
Fig. 2 illustrates a cross-sectional view of Embodiment 1 of the present disclosure;
Fig. 3 illustrates an exploded view of Embodiment 1 of the present disclosure;
Figs. 4-6 illustrate schematic views of usage states of Embodiment 1 of the present disclosure;
Fig. 7 illustrates a cross-sectional view of Embodiment 2 of the present disclosure;
Fig. 8 illustrates a cross-sectional view of Embodiment 3 of the present disclosure;
Fig. 9 illustrates a schematic view of a display module of Embodiment 4 of the present disclosure;
Fig. 10 illustrates a schematic view of the display module of Embodiment 4 of the present disclosure when a temperature of outflowing water is 30 °C;
Fig. 11 illustrates a schematic view of the display module in Embodiment 4 of the present disclosure when the temperature of the outflowing water is 39 °C;
Fig. 12 illustrates a schematic view of the display module of Embodiment 4 of the present disclosure when the temperature of the outflowing water is relatively high.

### DETAILED DESCRIPTION OF THE EMBODIMENTS

The present disclosure will be further described below in combination with the accompanying drawings and embodiments.

### Embodiment 1

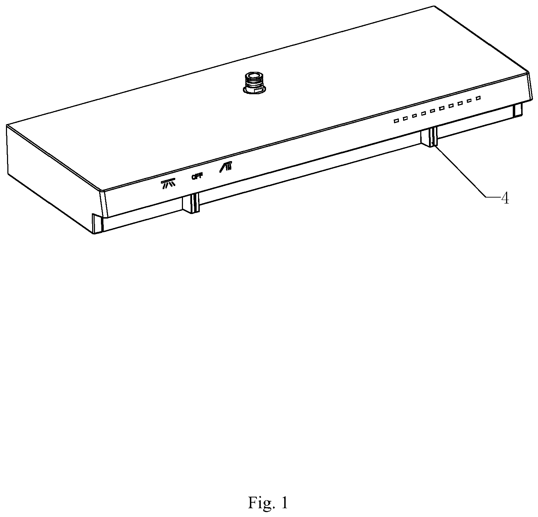

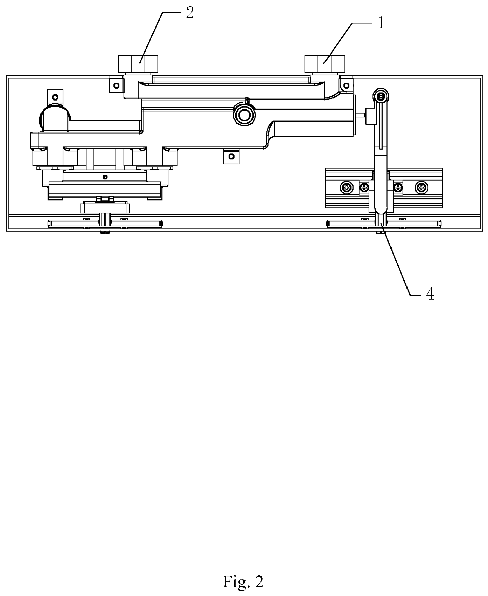

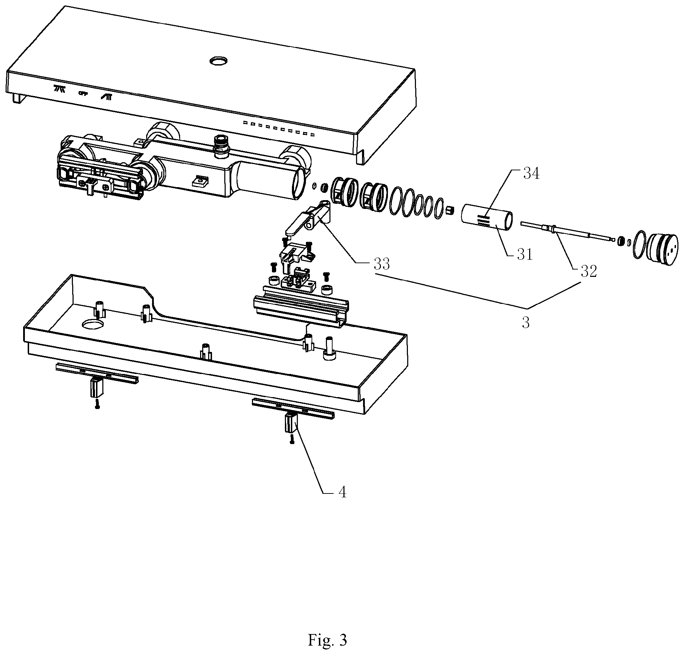

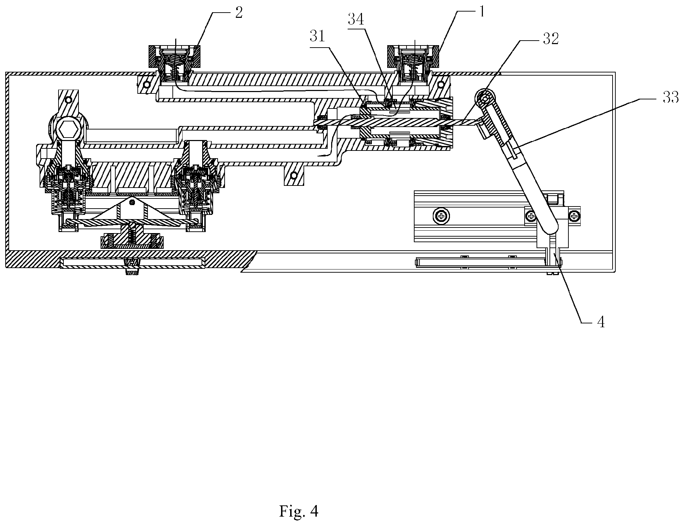

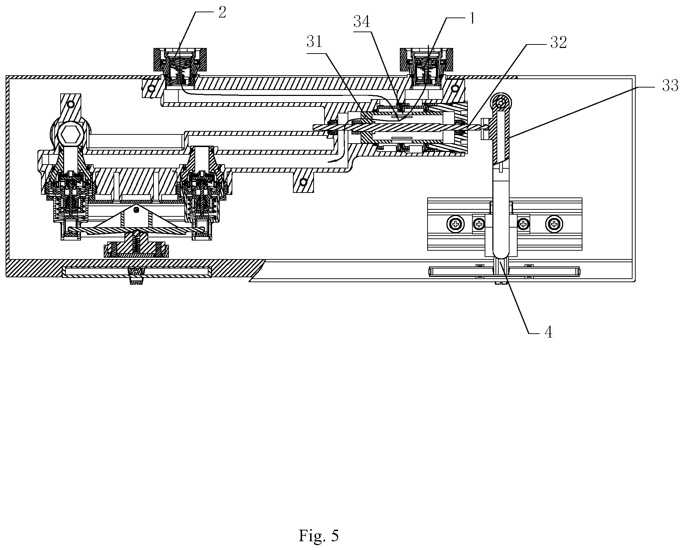

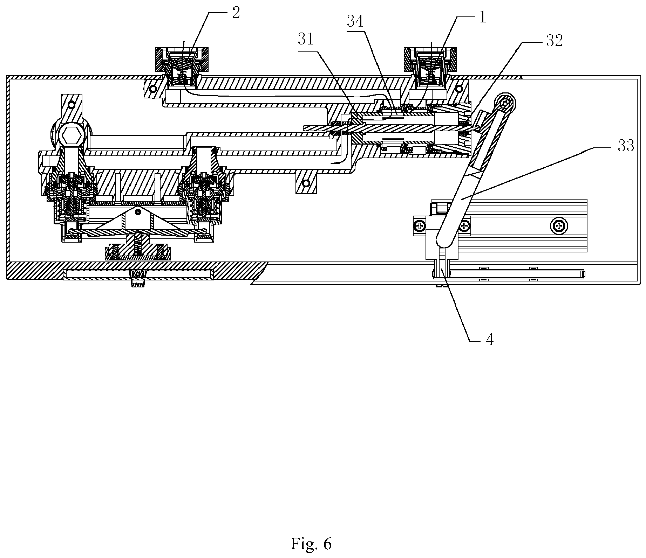

Referring to Figs. 1-6, this embodiment discloses a mechanical shower device having sliding temperature regulation, which comprises a cold water inlet 1, a hot water inlet 2, a switching valve 3 and a toggle button 4. The switching valve 3 comprises a water inlet 34. The toggle button 4 is disposed on a surface of the shower device and is configured to be toggled along a length direction of the shower device.

When the toggle button 4 is toggled, the toggle button 4 drives the water inlet 34 to be merely in communication with the cold water inlet 1, to be in communication with the cold water inlet 1 and the hot water inlet 2 at the same time, or to be merely in communication with the hot water inlet 2.

In the mechanical shower device having sliding temperature regulation, the toggle button 4 drives the water inlet 34 of a valve body to be connected to one or two of the cold water inlet 1 and the hot water inlet 2 to adjust a temperature of outflowing water. This temperature regulation method can increase or decrease the temperature by toggling the toggle button 4 in one direction, which is very intuitive, and a cost of the pure machine temperature regulation method is relatively low. Moreover, the toggle button 4 is disposed on the surface of the shower device, it is also very convenient to operate the toggle button 4 by the user.

In this embodiment, in order to achieve a temperature regulation operation, the switching valve 3 comprises the valve body 31 and a switching shaft 32 operatively disposed on the valve body 31. One end of the switching shaft 32 is operatively connected to the toggle button 4 by a linkage member 33. In this embodiment, the linkage member 33 is a swing shaft, one end of which is operatively connected to the toggle button 4, and the other end is rotatably connected to the one end of the switching shaft 32. In this way, when the toggle button 4 moves, the switching shaft 32 swings about a fulcrum that is rotatably connected to the switching shaft 32, and pushing force or pulling force generated due to the swinging will push or pull the switching shaft 32. When the switching shaft 32 moves, the valve body 31 is driven to move. When the valve body 31 moves, the water inlet 34 is merely in communication with the cold water inlet 1, in communication with the cold water inlet 1 and the hot water inlet 2 at the same time, or merely in communication with the hot water inlet 2.

In this embodiment, a side wall of the valve body 31 is disposed with the water inlet 34. In a detailed description, when the toggle button 4 is in a middle position, the water inlet 34 is in communication with the cold water inlet 1 and the hot water inlet 2 at the same time. When the toggle button 4 moves to two ends, the water inlet 34 is merely in communication with the cold water inlet 1 or the hot water inlet 2. In this way, when the toggle button 4 is in the middle position, the cold water inlet 1 and the hot water inlet 2 are respectively in communication with the water inlet 34, and the outflowing water is mixed water of cold water and hot water. When the toggle button 4 moves leftward relative to the middle position, a water flowing area between the water inlet 34 and the hot water inlet 2 becomes larger, and a water flowing area between the water inlet 34 and the cold water inlet 1 becomes smaller. When the toggle button 4 moves rightward relative to the middle position, the water passage area between the water inlet 34 and the cold water inlet 1 becomes larger, and the water passage area between the water inlet 34 and the hot water inlet 2 becomes smaller. In this way, stepless adjustment of water temperature is achieved.

### Embodiment 2

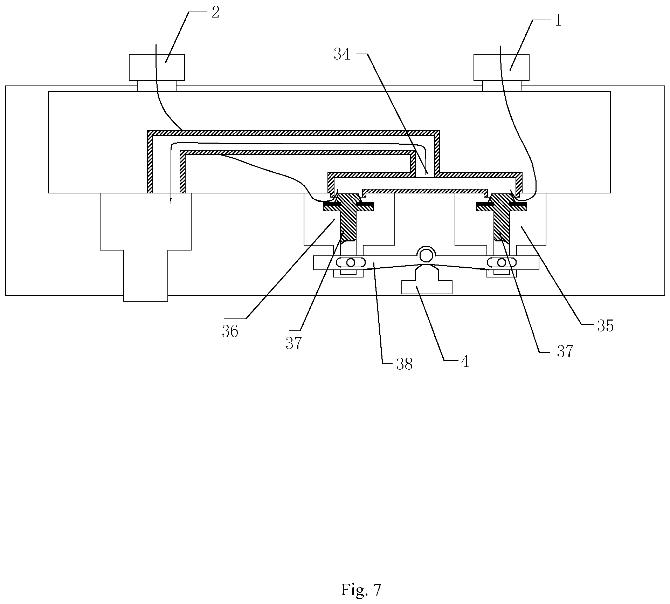

Referring to Fig. 7, this embodiment differs from Embodiment 1 in that the switching valve 3 comprises a cold water proportional valve 35 and a hot water proportional valve 36, and the water inlet 34 is in communication with water outlets of the cold water proportional valve 35 and the hot water proportional valve 36. Water temperature regulation can also be achieved due to adjusting water flowing areas of the water outlets of the cold water proportional valve 35 and the hot water proportional valve 36.

The cold water proportional valve 35 and the hot water proportional valve 36 respectively comprise a pole plug 37 configured to open and close the water outlets, so that the water flowing areas of the water outlets of the cold water proportional valve 35 and the hot water proportional valve 36 change accordingly when the toggle button 4 is toggled. Pole plugs 37 of the cold water proportional valve 35 and the hot water proportional valve 36 are connected by an adjusting rod 38.

In this embodiment, a middle portion of the adjusting rod 38 is a swing fulcrum. When the adjusting rod 38 is in a horizontal position, the pole plugs 37 respectively open the water outlets of the cold water proportional valve 35 and the hot water proportional valve 36. When the adjusting rod 38 swings towards the cold water proportional valve 35 or the hot water proportional valve 36, the adjusting rod 38 pushes the pole plugs 37 to gradually close the water outlets of the cold water proportional valve 35 or the hot water proportional valve 36.

When the toggle button 4 move leftward or rightward relative to the fulcrum, a push force generated between the toggle button 4 and the adjustment rod 38 pushes the adjustment rod 38 to swing towards the cold water proportional valve 35 or the hot water proportional valve 36, so that the toggle button 4 drives the adjustment rod 38 to swing. In a detailed description, a side of the adjusting rod 38 facing the toggle button 4 extends to define an inclined surface from the fulcrum to two sides.

### Embodiment 3

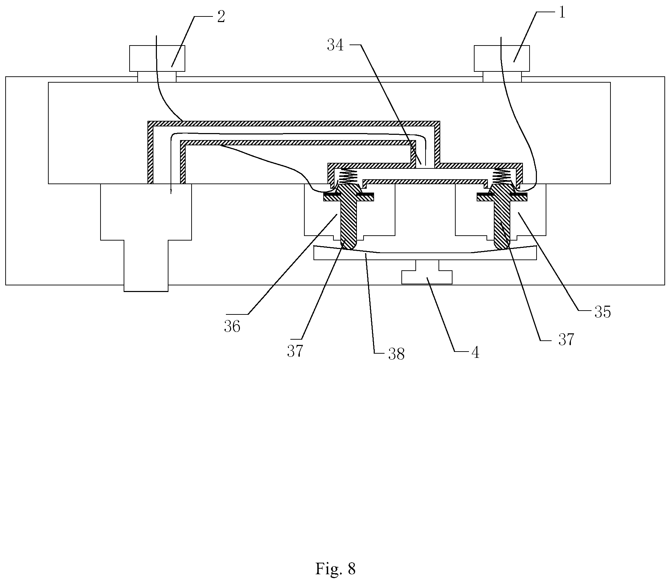

Referring to Fig. 8, this embodiment differs from Embodiment 1 in that the switching valve 3 comprises a cold water proportional valve 35 and a hot water proportional valve 36, and the water inlet 34 is in communication with water outlets of the cold water proportional valve 35 and the hot water proportional valve 36. Water temperature regulation can also be achieved due to adjusting water flowing areas of the water outlets of the cold water proportional valve 35 and the hot water proportional valve 36.

The cold water proportional valve 35 and the hot water proportional valve 36 respectively comprise a pole plug 37 configured to open and close the water outlets, so that the water flowing areas of the water outlets of the cold water proportional valve 35 and the hot water proportional valve 36 change accordingly when the toggle button 4 is toggled. Pole plugs 37 of the cold water proportional valve 35 and the hot water proportional valve 36 are connected by an adjusting rod 38

In this Embodiment, the adjusting rod 38 is operatively connected to the toggle 4 along a moving direction of the toggle 4, so that the adjusting rod 38 drives the pole plugs 37 to change and adjust water flowing areas of the water outlets of the cold water proportional valve 35 and the hot water proportional valve 36. When the toggle button 4 moves leftward or rightward relative to a middle position, a push force generated between the adjusting rod 38 and the plug 37 pushes the pole plug 37 to close the water outlets of the cold water proportional valve 35 or hot water proportional valve 36.

### Embodiment 4

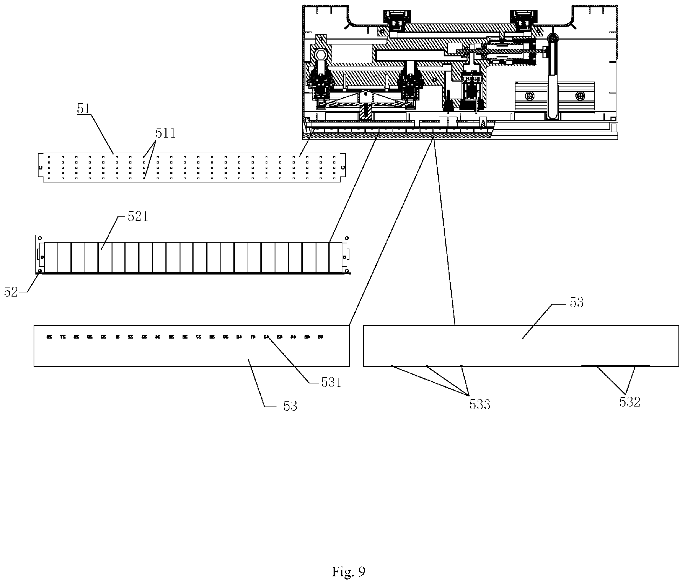

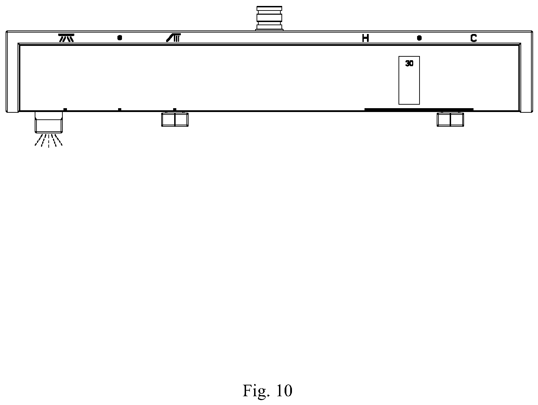

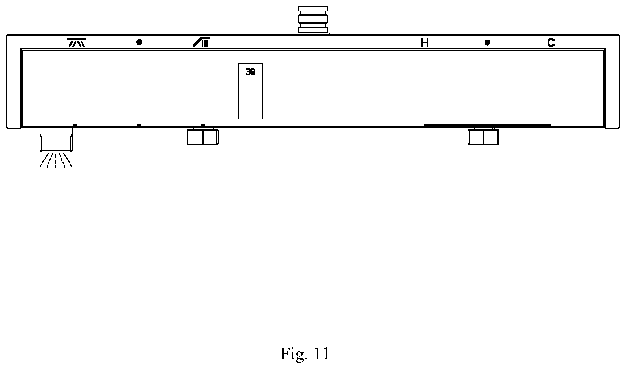

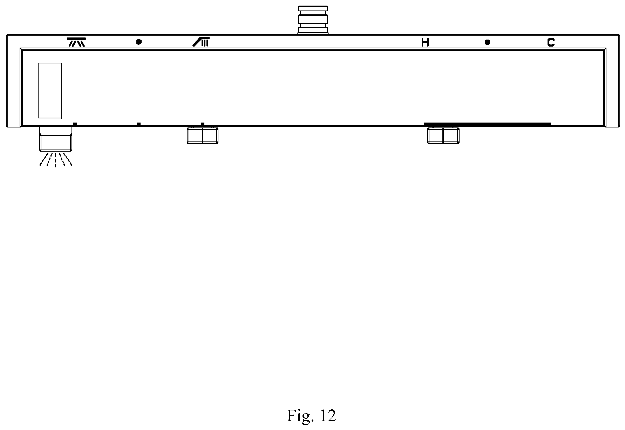

Referring to Figs. 9-12, this embodiment further provides a display module of the mechanical shower device having sliding temperature regulation in Embodiments 1- 3, the display module comprises a light-emitting module 51, a lamp holder 52 and a panel 53. The light-emitting module 51 and the panel 53 are respectively disposed on two sides of the lamp holder 52 along a thickness direction of the lamp holder. A side of the lamp holder 52 facing the light-emitting module 51 is divided into a plurality of grids 521 along a sliding direction for temperature regulation, surfaces of the grids 521 along the thickness direction of the lamp holder 52 are light-transmitting surfaces, and the light-emitting module 51 is disposed with light-emitting units 511 corresponding to the grids 521 one-to-one.

The panel 53 is a transparent panel, and a side of which facing the lamp holder 52 is covered with a light-transmitting layer. A side of the light-transmitting layer facing the lamp holder 20 is disposed with opaque numbers 531 corresponding to part of the grids one-to-one.

Through the abovementioned design, when the user uses the toggle button 4 to adjust the temperature, a temperature sensor can feel temperature change of the temperature of the outflowing water and send a detection value to a main control chip, and the main control chip lights up a corresponding light-emitting unit 511 according to the temperature, light emitted by the light-emitting unit 511 is blocked by ribs around the grids 521 and is emitted from the light-transmitting surfaces of the grids 521, the emitted light is illuminated to the panel 53 through the light-transmitting layer, so that the panel 53 defines an illuminated area with the same shape as the grid 521. For example, if the grid 521 is rectangular, a rectangular area on the panel 53 is illuminated. However, the number 531 is opaque, so there will be a black or gray number displayed on this rectangular area. The user can then know a current temperature of the outflowing water.

In this embodiment, the light-transmitting layer is a white coating screen-printed on the panel 53, and the number 531 is further screen-printed on the light-transmitting layer. Therefore, when there is no light illuminated on the panel 53 from a rear side, the panel 53 is pure white when viewed from a front side, and an integrity is better.

In this embodiment, the number of grids 521 is N, wherein N-1 corresponds to the opaque numbers 531 one-to-one. When the temperature of the outflowing water is greater than the maximum value of the opaque numbers, a light-emitting unit 511 corresponding to the remaining grid 521 blinks and emits light. A purpose of this design is to remind consumers to lower down water temperature due to the blinking of the grid 521 when the temperature of the outflowing water is too high, so that a harm applied to a body of the consumer due to a high temperature is avoided.

In addition, in order to further facilitate the user to adjust the temperature and to switch a water outlet terminal, a side of the panel 53 facing away from the light-transmitting layer is disposed with water outlet terminal indicator icons 533 and heating and cooling indicator icons 532. Wherein the heating and cooling indicator icons 532 are respectively red and blue, and the toggle button 4 is disposed a junction between blue and red. When being toggled towards a blue part, the temperature is lowered down, and vice versa, the operation is clear. The water outlet terminal indicator icons 533 comprises three position icons for a hand shower, a top shower and water off. The icon corresponds to positions of the three icons for the hand shower, the top shower and the water off. When the toggle button is toggled to a corresponding icon, a corresponding outlet terminal is switched. The water outlet terminal indicator icons 533 and the heating and cooling indicator icons 532 are disposed on the side of the panel 53 facing the light-transmitting layer, even in case there is no light illuminated to the panel 53 from the rear side, the water outlet terminal indicator icons 533 and the heating and cooling indicator icons 532 can also be observed from the front side of the panel, so that the user can observe the water outlet indicator icons 533 and the heating and cooling indicator icons 532 before showering.

The abovementioned display module, which is applied to the mechanical shower device having sliding temperature regulation of Embodiments 1-3, can also be widely applied to other shower devices having sliding temperature regulation. However, it is not limited to this, and will not be further described here.

The invention may be summarized as follows: The present disclosure discloses a mechanical shower device having sliding temperature regulation, which comprising a cold water inlet, a hot water inlet, a switching valve and a toggle button; the switching valve comprises a water inlet; the toggle button is disposed on a surface of the shower device and is configured to be toggled along a length direction of the shower device; when the toggle button is in a middle position, the water inlet is in communication with the cold water inlet and the hot water inlet at the same time; when the toggle button moves leftward or rightward relative to the middle position, a water flowing area between the water inlet and one of the cold water inlet and hot water inlet gradually decreases, and a water flowing area between the water inlet and the other one gradually increases. The mechanical shower device having sliding temperature regulation adopts a pure machine structure to realize sliding temperature regulation, a cost is relatively low, and an operation method is relatively intuitive.

The invention may also be summarized as follows: 1. A mechanical shower device having sliding temperature regulation, characterized in that: which comprising a cold water inlet, a hot water inlet, a switching valve and a toggle button; the switching valve comprises a water inlet; the toggle button is disposed on a surface of the shower device and is configured to be toggled along a length direction of the shower device;
When the toggle button is in a middle position, the water inlet is in communication with the cold water inlet and the hot water inlet at the same time; when the toggle button moves leftward or rightward relative to the middle position, a water flowing area between the water inlet and one of the cold water inlet and hot water inlet gradually decreases, and a water flowing area between the water inlet and the other one gradually increases.
2. The mechanical shower device having sliding temperature regulation according to item 1, characterized in that: the switching valve comprises a valve body and a switching shaft operatively disposed on the valve body; one end of the switching shaft is operatively connected to the toggle button by a linkage member.
3. The mechanical shower device having sliding temperature regulation according to item 2, characterized in that: a side wall of the valve body is disposed with the water inlet.
4. The mechanical shower device having sliding temperature regulation according to item 2 and/or 3, characterized in that: the linkage member is a swing shaft, one end of the swing shaft is operatively connected to the toggle button, and the other end is rotatably connected to the one end of the switching shaft.
5. The mechanical shower device having sliding temperature regulation according to any one or more of items 1 to 4, characterized in that: when the toggle button is in the middle position, the water inlet is in communication with the cold water inlet and the hot water inlet at the same time; when the toggle button moves to two end positions, the water inlet is merely in communication with the cold water inlet or the hot water inlet.
6. The mechanical shower device having sliding temperature regulation according to any one or more of items 1 to 5, characterized in that: the switching valve comprises a cold water proportional valve and a hot water proportional valve, and the water inlet is in communication with water outlets of the cold water proportional valve and the hot water proportional valve.
7. The mechanical shower device having sliding temperature regulation according to item 6, characterized in that: the cold water proportional valve and the hot water proportional valve respectively comprise a pole plug configured to open and close the water outlets; pole plugs of the cold water proportional valve and the hot water proportional valve are connected by an adjusting rod.
8. The mechanical shower device having sliding temperature regulation according to item 7, characterized in that: a middle portion of the adjusting rod is a swing fulcrum; when the adjusting rod is in a horizontal position, the water outlets of the cold water proportional valve and the hot water proportional valve are respectively opened by the pole plugs; when the swing fulcrum swings towards the cold water proportional valve or the hot water proportional valve, the water outlets of the cold water proportional valve or the hot water proportional valve are gradually closed by the pole plugs.
9. The mechanical shower device having sliding temperature regulation according to item 8, characterized in that: when the toggle button moves leftward or rightward relative to the fulcrum, a push force generated between the toggle button and the adjusting rod pushes the adjusting rod to swing towards the cold water proportional valve or the hot water proportional valve.
10. The mechanical shower device having sliding temperature regulation according to item 8 and/or 9, characterized in that: a side of the adjusting rod facing the toggle button extends to define an inclined surface from the fulcrum to the two sides.
11. The mechanical shower device having sliding temperature regulation according to any one or more of items 6 to 10, characterized in that: the adjusting rod is operatively connected to the toggle button along a moving direction of the toggle; when the toggle button moves leftward or rightward relative to the middle position, a push force generated between the adjusting rod and the pole plugs pushes the pole plugs to gradually close the water outlets of the cold water proportional valve or the hot water proportional valve.
12. The mechanical shower device having sliding temperature regulation according to any one or more of items 1 to 11, characterized in that: which further comprises a display module, which further comprises a light-emitting module, a lamp holder and a panel; the light-emitting module and the panel are respectively disposed on two sides of the lamp holder along a thickness direction of the lamp holder; a side of the lamp holder facing the light-emitting module is divided into a plurality of grids along a sliding direction for temperature regulation, surfaces of the grids along the thickness direction of the lamp holder are light-transmitting surfaces, and the light-emitting module is disposed with light-emitting units corresponding to the grids one-to-one; the panel is a transparent panel, a side of which facing the lamp holder is covered with a light-transmitting layer, and a side of the light-transmitting layer facing the lamp holder is disposed with opaque numbers corresponding to part of the grids one-to-one.
13. The mechanical shower device having sliding temperature regulation according to item 12, characterized in that: the number of grids is N, wherein N-1 corresponds to the opaque numbers one to one; when temperature of outflowing water is greater than the maximum value of the opaque numbers, a light-emitting unit corresponding to the remaining grid flashes and emits light.
14. The mechanical shower device having sliding temperature regulation according to item 12 and/or 13, characterized in that: a side of the panel facing the light-transmitting layer is disposed with a water outlet terminal indicator icon, and heating-cooling indicator icons.
15. A display module of a shower device having sliding temperature regulation, characterized in that, which comprises a light-emitting module, a lamp holder and a panel; the light-emitting module and the panel are respectively disposed on two sides of the lamp holder along a thickness direction of the lamp holder; a side of the lamp holder facing the light-emitting module is divided into a plurality of grids along a sliding direction for temperature regulation, surfaces of the grids along the thickness direction of the lamp holder are light-transmitting surfaces, and the light-emitting module is disposed with light-emitting units corresponding to the grids one-to-one; the panel is a transparent panel, a side of which facing the lamp holder is covered with a light-transmitting layer, and a side of the light-transmitting layer facing the lamp holder is disposed with opaque numbers corresponding to part of the grids one-to-one.
16. The display module of the shower device having sliding temperature regulation according to item 15, characterized in that: the number of grids is N, wherein N-1 corresponds to the opaque numbers one to one; when temperature of outflowing water is greater than the maximum value of the opaque numbers, a light-emitting unit corresponding to the remaining grid blinks and emits light.
17. The display module of the shower device having sliding temperature regulation according to item 15 and/or 16, characterized in that: a side of the panel facing the light-transmitting layer is disposed with a water outlet terminal indicator icon, and heating-cooling indicator icons.
18. A shower having sliding temperature regulation, characterized in that: which comprises the display module of any one or more of items 15 to 17.

The aforementioned embodiments are merely some embodiments of the present disclosure, and the scope of the disclosure of is not limited thereto. Thus, it is intended that the present disclosure cover any modifications and variations of the presently presented embodiments provided they are made without departing from the appended claims and the specification of the present disclosure.

## Claims

1. A mechanical shower device having sliding temperature regulation, **characterized in that**: which comprising a cold water inlet, a hot water inlet, a switching valve and a toggle button; the switching valve comprises a water inlet; the toggle button is disposed on a surface of the shower device and is configured to be toggled along a length direction of the shower device;
When the toggle button is in a middle position, the water inlet is in communication with the cold water inlet and the hot water inlet at the same time; when the toggle button moves leftward or rightward relative to the middle position, a water flowing area between the water inlet and one of the cold water inlet and hot water inlet gradually decreases, and a water flowing area between the water inlet and the other one gradually increases.

2. The mechanical shower device having sliding temperature regulation according to claim 1, **characterized in that**: the switching valve comprises a valve body and a switching shaft operatively disposed on the valve body; one end of the switching shaft is operatively connected to the toggle button by a linkage member.

3. The mechanical shower device having sliding temperature regulation according to claim 2, **characterized in that**: a side wall of the valve body is disposed with the water inlet.

4. The mechanical shower device having sliding temperature regulation according to claim 2 and/or 3, **characterized in that**: the linkage member is a swing shaft, one end of the swing shaft is operatively connected to the toggle button, and the other end is rotatably connected to the one end of the switching shaft.

5. The mechanical shower device having sliding temperature regulation according to any one or more of claims 1 to 4, **characterized in that**: when the toggle button is in the middle position, the water inlet is in communication with the cold water inlet and the hot water inlet at the same time; when the toggle button moves to two end positions, the water inlet is merely in communication with the cold water inlet or the hot water inlet.

6. The mechanical shower device having sliding temperature regulation according to any one or more of claims 1 to 5, **characterized in that**: the switching valve comprises a cold water proportional valve and a hot water proportional valve, and the water inlet is in communication with water outlets of the cold water proportional valve and the hot water proportional valve.

7. The mechanical shower device having sliding temperature regulation according to claim 6, **characterized in that**: the cold water proportional valve and the hot water proportional valve respectively comprise a pole plug configured to open and close the water outlets; pole plugs of the cold water proportional valve and the hot water proportional valve are connected by an adjusting rod.

8. The mechanical shower device having sliding temperature regulation according to claim 7, **characterized in that**: a middle portion of the adjusting rod is a swing fulcrum; when the adjusting rod is in a horizontal position, the water outlets of the cold water proportional valve and the hot water proportional valve are respectively opened by the pole plugs; when the swing fulcrum swings towards the cold water proportional valve or the hot water proportional valve, the water outlets of the cold water proportional valve or the hot water proportional valve are gradually closed by the pole plugs.

9. The mechanical shower device having sliding temperature regulation according to claim 8, **characterized in that**: when the toggle button moves leftward or rightward relative to the fulcrum, a push force generated between the toggle button and the adjusting rod pushes the adjusting rod to swing towards the cold water proportional valve or the hot water proportional valve.

10. The mechanical shower device having sliding temperature regulation according to claim 8 and/or 9, **characterized in that**: a side of the adjusting rod facing the toggle button extends to define an inclined surface from the fulcrum to the two sides.

11. The mechanical shower device having sliding temperature regulation according to any one or more of claims 7 to 10, **characterized in that**: the adjusting rod is operatively connected to the toggle button along a moving direction of the toggle; when the toggle button moves leftward or rightward relative to the middle position, a push force generated between the adjusting rod and the pole plugs pushes the pole plugs to gradually close the water outlets of the cold water proportional valve or the hot water proportional valve.

12. The mechanical shower device having sliding temperature regulation according to any one or more of claims 1 to 11, **characterized in that**: which further comprises a display module, which further comprises a light-emitting module, a lamp holder and a panel; the light-emitting module and the panel are respectively disposed on two sides of the lamp holder along a thickness direction of the lamp holder; a side of the lamp holder facing the light-emitting module is divided into a plurality of grids along a sliding direction for temperature regulation, surfaces of the grids along the thickness direction of the lamp holder are light-transmitting surfaces, and the light-emitting module is disposed with light-emitting units corresponding to the grids one-to-one; the panel is a transparent panel, a side of which facing the lamp holder is covered with a light-transmitting layer, and a side of the light-transmitting layer facing the lamp holder is disposed with opaque numbers corresponding to part of the grids one-to-one.

13. The mechanical shower device having sliding temperature regulation according to claim 12, **characterized in that**: the number of grids is N, wherein N-1 corresponds to the opaque numbers one to one; when temperature of outflowing water is greater than the maximum value of the opaque numbers, a light-emitting unit corresponding to the remaining grid flashes and emits light.

14. A display module of a shower device having sliding temperature regulation, **characterized in that**, which comprises a light-emitting module, a lamp holder and a panel; the light-emitting module and the panel are respectively disposed on two sides of the lamp holder along a thickness direction of the lamp holder; a side of the lamp holder facing the light-emitting module is divided into a plurality of grids along a sliding direction for temperature regulation, surfaces of the grids along the thickness direction of the lamp holder are light-transmitting surfaces, and the light-emitting module is disposed with light-emitting units corresponding to the grids one-to-one; the panel is a transparent panel, a side of which facing the lamp holder is covered with a light-transmitting layer, and a side of the light-transmitting layer facing the lamp holder is disposed with opaque numbers corresponding to part of the grids one-to-one.

15. The display module of the shower device having sliding temperature regulation according to claim 14, **characterized in that**: the number of grids is N, wherein N-1 corresponds to the opaque numbers one to one; when temperature of outflowing water is greater than the maximum value of the opaque numbers, a light-emitting unit corresponding to the remaining grid blinks and emits light.
